# EUROPEAN PATENT SPECIFICATION

(11) **EP 3 043 093 B1**
(45) Date of publication and mention of the grant of the patent: **17.05.2017**
(21) Application number: 15150245.7
(22) Date of filing: 07.01.2015
(51) Int. Cl.: F16K 3/18, F16K 27/04

(54) **Double sealing valve**
Doppeldichtungsventil
Soupape d'étanchéité double

(43) Date of publication of application: 13.07.2016
(73) Proprietor: King Lai Hygienic Materials Co., Ltd., 30264 Zhubei City, Hsinchu County (TW)
(72) Inventor: Huang, Shu-Mei, 30264 Zhubei City, Hsinchu County (TW)
(74) Representative: Viering, Jentschura & Partner mbB Patent- und Rechtsanwälte

(56) References cited:
- EP-A1- 0 314 832
- WO-A1-2004/099656
- US-A- 4 052 036
- US-A1- 2005 109 968
- US-B1- 7 871 061

## Description

### BACKGROUND OF THE INVENTION

### 1. Field of the Invention:

The present invention relates to sealing assemblies of a valve, and more particularly, to vacuum valve having double seal plates and capable of solidly sealing.

### 2. Description of the Related Art:

As disclosed in **Figs. 19~20** of US 7,090,192, a vacuum valve comprises a valve body internally provided with a gate assembly rotatably driven by a swing arm, wherein the gate assembly is allowed to open or close against a valve opening of the valve body. Therein, the gate assembly has two gate plates, one steel ball plate between the two gate plates, and a plurality of rolling steel balls on the steel ball plate. Also, the inner side of the gate plate is provided with a plurality of driving grooves corresponding to the rolling steel balls, while the depth of the driving grooves varies from being deep to shallow. When the gate assembly seals the valve opening, the steel ball plate is further driven, such that the rolling steel balls move from the deep position to the shallow position of the driving grooves. As a result, the two gate plates are pushed outward, separately, such that the gate plates rigidly contact the valve opening to achieve a highly seal air-tight status.

However, the contact relationship between the rolling steel balls, the gate plates, and the driving grooves is a point-contact relationship. A counter force produced during the two gate plates being pushed outward concentrates on the contact points, so that the bearable pressure per unit square measure of the rolling steel balls is limited, so as to limit the contact force between the gate plates and the valve opening. Furthermore, due to the long period usage, the rolling steel balls are easily worn down and broken, causing the demand of maintenance. As a result, the valve body of such a vacuum valve needs to be dismantled, and all the components thereof shall be taken out for facilitating the maintenance of the components such as rolling steel balls, failing to meet the requirement of being conveniently applied.

### SUMMARY OF THE INVENTION

For improving the abovementioned issues and inconveniences, the present invention discloses a double sealing valve, which further produces a sealing force when the seal plates seal the valve hole, so as to increase the air-tightness of the valve.

The present invention provides a double sealing valve, comprising:
at least a power cylinder provided with a driving axle capable of axially moving;
a valve body formed of a hollow first valve member and a hollow second valve member, the first valve member having a cylinder seat for receiving the power cylinder, an axle bore disposed on the cylinder seat for the driving axle to pass through into the first valve member, the second valve member provided with two valve holes oppositely disposed thereon;
a seal plate assembly disposed in the valve body and having a driving frame connected to one end of the driving axle, plural roller assemblies disposed around the driving frame, with each of the roller assemblies having a triangle roller seat, one corner part of the roller seat axially disposed on the periphery of the driving frame with the other two corners respectively provided with a roller bearing; furthermore, the seal plate assembly has two seal plates, while each of the seal plates is disposed between one of the two sides of the driving frame and the valve body, respectively, and each of the seal plates is concavely provided with plural driving grooves in an amount corresponding to the amount of the roller assemblies for allowing each of the roller bearings to slide in the corresponding driving groove.

The main objective of the present invention is that the driving axle triggers the seal plate assembly to move from the first valve member to the inner space of the second valve member. When the seal plate assembly pushes against the wall of the second valve member, the roller bearing of the roller seat is driven from a deep stop portion to a shallow slope portion, such that the distance between the two seal plates is increased, whereby the seal plates fittingly seal the valve hole. The roller seats effectively convert the force produced by the driving axle into a sealing force between the seal plates and the valve hole. Also, the roller bearing of each of the roller seat is able to contact the seal plates in a manner of line-contact and plane-contact, so as to effectively disperse the force between the roller bearing and the seal plates, increasing the capability of the roller bearings bearing the force, thereby allowing the driving axle to output a greater sealing force, thus increasing the general air-tightness of the valve and extending the service life of the valve

The secondary objective of the present invention is that at least a buffer member is disposed on the one side of the driving frame opposite to the driving axle. In the preferred embodiment provided by the present invention, the buffer member is in axial alignment with the driving axle. When the seal plate assembly contacts the wall of the second valve member, the buffer member produces a buffering function for absorbing the impact force between the wall of the second valve member and the seal plate assembly, thereby preventing the components such as the driving frame and the seal plates from becoming deformed or damaged, thus increasing the service life of the product.

### BRIEF DESCRIPTION OF THE DRAWINGS

**Fig. 1** is a perspective view of the double sealing valve in accordance with the present invention.
**Fig. 2** is an exploded view of the double sealing valve in accordance with the present invention.
**Fig**. **3** is a partial exploded view of the seal plate assembly of the double sealing valve in accordance with the present invention.
**Fig. 4** is a sectional view of the double sealing valve in accordance with the present invention.
**Fig**. **5** is a first sectional schematic view illustrating the operation of the present invention.
**Fig. 6** is a second sectional schematic view illustrating the operation of the present invention.
**Fig. 7** is a third sectional schematic view illustrating the operation of the present invention.
**Fig. 8** is a fourth sectional schematic view illustrating the operation of the present invention.
**Fig. 9** is an exploded view of the seal plate assembly of the double sealing valve in another embodiment provided by the present invention.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

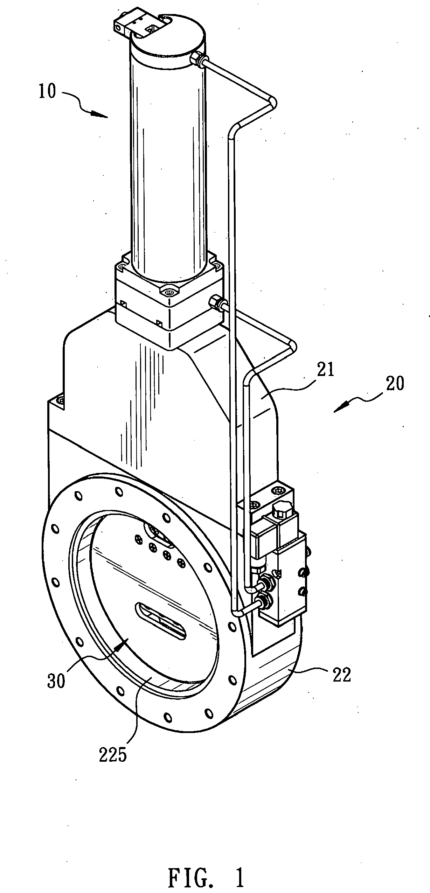

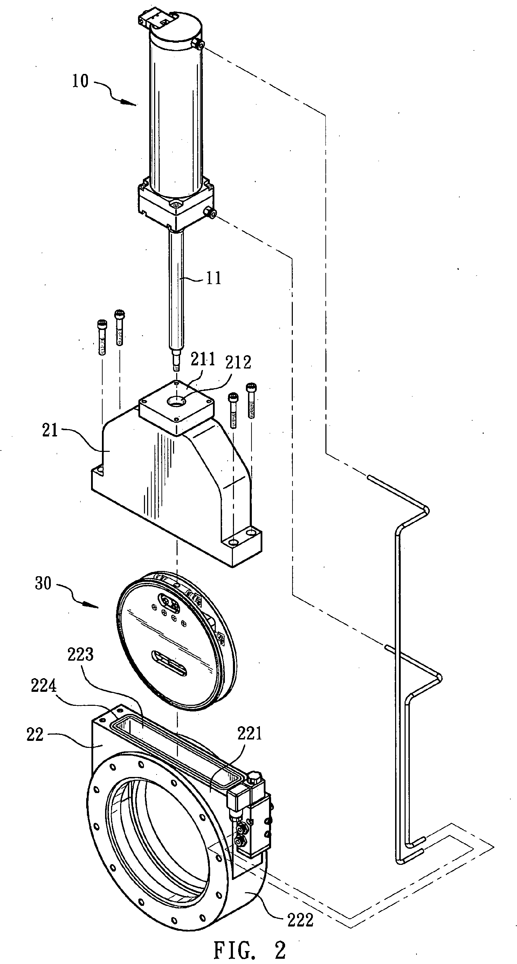

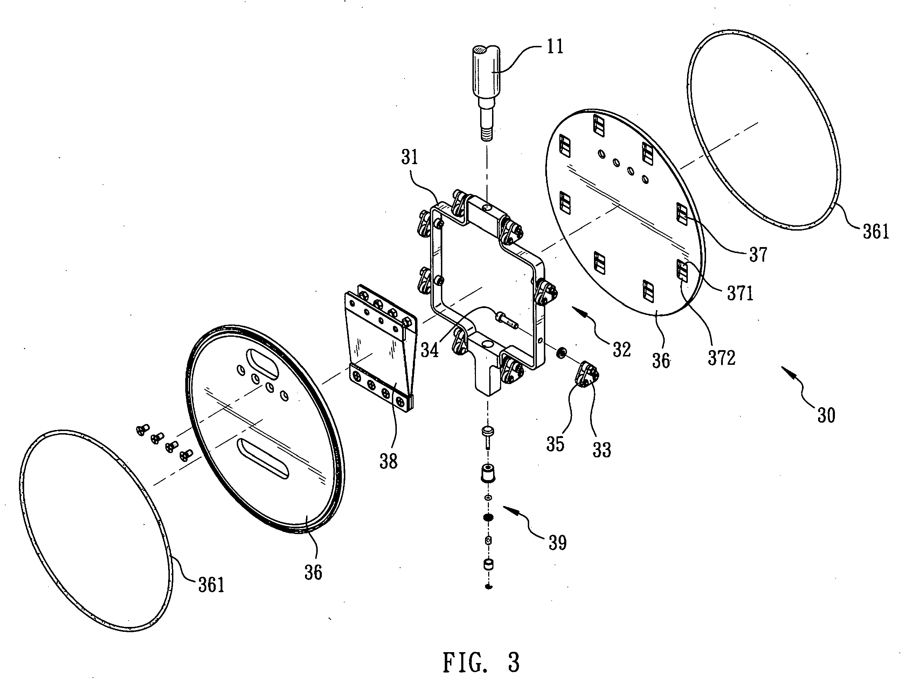

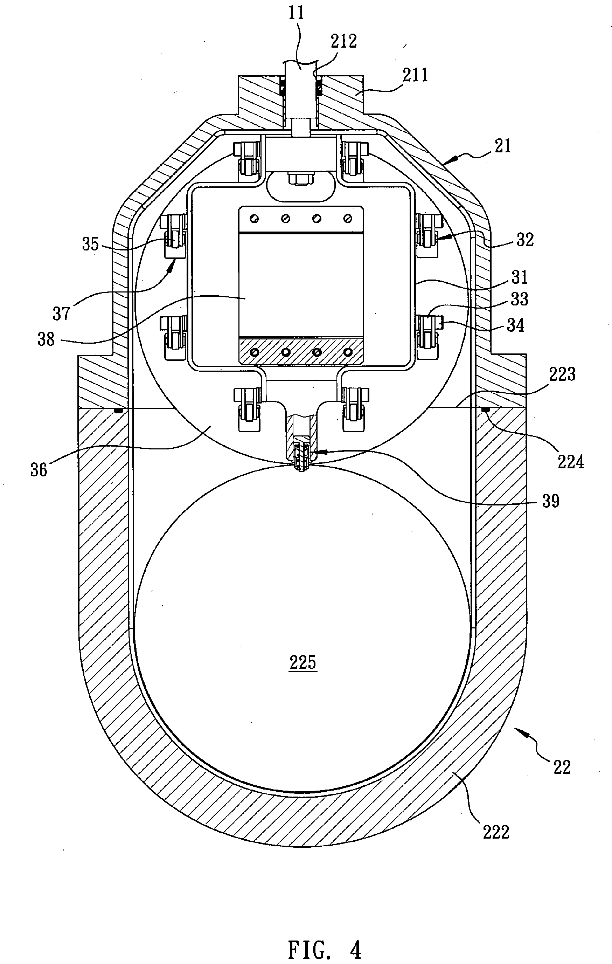

Referring to **Fig. 1** to **Fig. 4**, the double sealing valve provided by the present invention comprises at least a power cylinder **10**, a valve body **20**, and a seal plate assembly **30.**

The power cylinder **10** is provided with a driving axle **11** capable of axially moving. The power cylinder **10** is allowed to be a pneumatic cylinder or a hydraulic cylinder.

The valve body **20** is formed of a hollow first valve member **21** and a hollow second valve member **22.** The first valve member **21** is provided with a cylinder seat **211** for receiving the power cylinder **10**, while an axle bore **212** is disposed on the cylinder seat **211** for the driving axle **11** to pass through into the first valve member **21.** The second valve member **22** is formed of two side boards **221** combined with at least an arc board **222**, and the arc board **222** has an opening **223** for being connected with the first valve member **21**, wherein the inner spaces of the first valve member **21** and the second valve member **22** are connected, such that the driving axle **11** is allowed to pass through into the first valve member **21** and the second valve member **22** from the axle bore **212**. Also, two valve holes **225** are oppositely disposed on two side boards **221** of the second valve member **22**, respectively. At least a seal member **224** is disposed on the periphery of the opening **223**, whereby the first valve member **21** is allowed to air-tightly combined with the second valve member **22.**

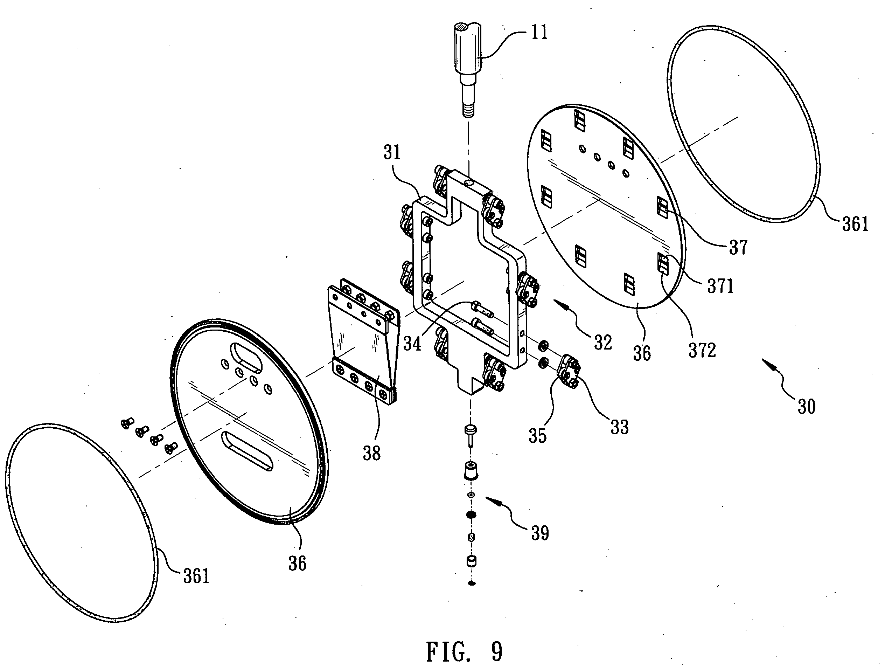

The seal plate assembly **30** is disposed in the valve body **20** and comprises a driving frame **31** connected to one end of the driving axle **11.** The periphery of the driving frame **31** is provided with a plurality of roller assemblies **32**, wherein each roller assembly **32** includes a triangle roller seat **33** axially disposed on the periphery of the driving frame **31** through a roller axle **34.** Also, the seal plate assembly **30** has two seal plates **36**, while each of the seal plates **36** is disposed between one of the two sides of the driving frame **31** and the valve body **20**, respectively. Each of the seal plates **36** is concavely provided with plural driving grooves **37** in an amount corresponding to the amount of the roller assemblies **32.** Two roller bearings **35** are disposed on the roller seat **33** and contact the driving groove **37**, such that each of the roller bearings **35** is allowed to slide in the corresponding driving groove **37.** In the preferred embodiment, the roller seat **33** is a triangular seat, wherein the roller axle **34** is disposed on one corner part of the roller seat **33**, while two roller bearings **35** are placed on the other two corners of the roller seat **33**, respectively. In other embodiment, referring to **Fig. 9**, the roller seat **33** is formed as a rhombus shape, wherein two roller axles **34** are disposed on two corners of the roller seat **33** which are placed on the vertical axis thereof, and two roller bearings **35** are disposed on the other two corners on the horizontal axis thereof, so as to effectively decrease unnecessary swaying of the roller seat **33** and increase the stability and the force bearing capability thereof. At least a seal member **361** is disposed around the periphery on one side of each of the seal plate **36** opposite to the driving frame **31.**

The two seal plates **36** are connected by at least an elastic member **38**, while the elastic member **38** permanently keeps the two seal plates **36** getting close to each other. For example, the elastic member **38** is allowed to be a V-shaped spring board. One end of the driving frame **31** opposite to the driving axle **11** is provided with at least a buffer member **39.** In the preferred embodiment, the buffer member **39** is in axial alignment with the driving axle **11.**

Furthermore, the driving groove **37** is formed of a stop portion **371** and a slope portion **372.** The stop portion **371** is disposed on one side of the driving groove **37** facing toward the driving axle **11**, while the slope portion **372** is disposed on the other side of the driving groove **37** opposite to the driving axle **11.** In addition, depth of the driving groove **37** from the stop portion **371** to the slope portion **372** varies from a deep depth to a shallower depth.

With the foregoing configuration, operation of the present invention will be illustrated below.

Referring to **Fig. 1** to **Fig. 4** illustrating the valve of the present invention in an open status, the driving axle **11** of the power cylinder **10** keeps the seal plate assembly **30** remaining in the first valve member **21**, so as to keep the two valve holes **225** unobstructed.

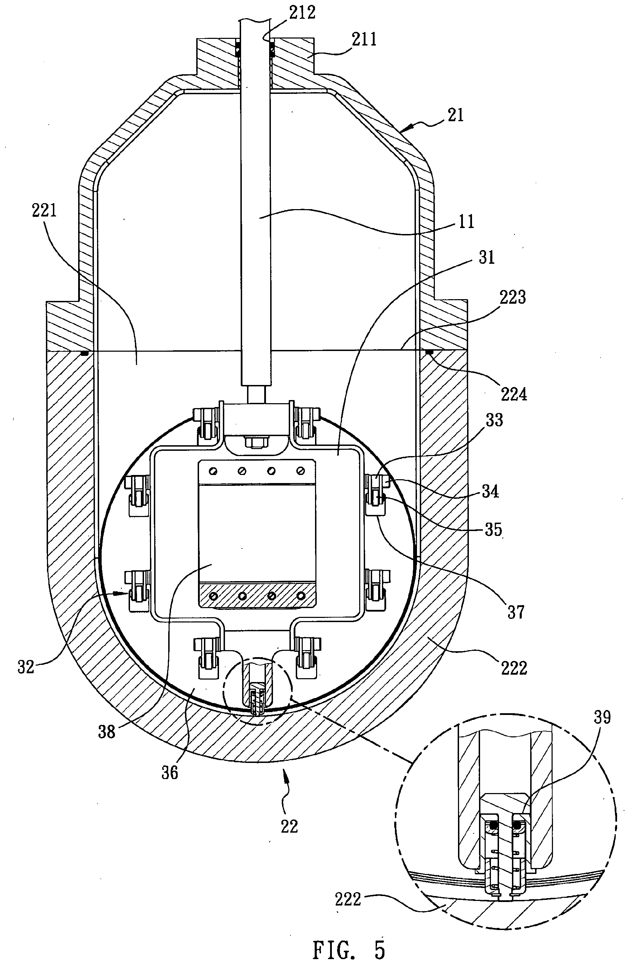

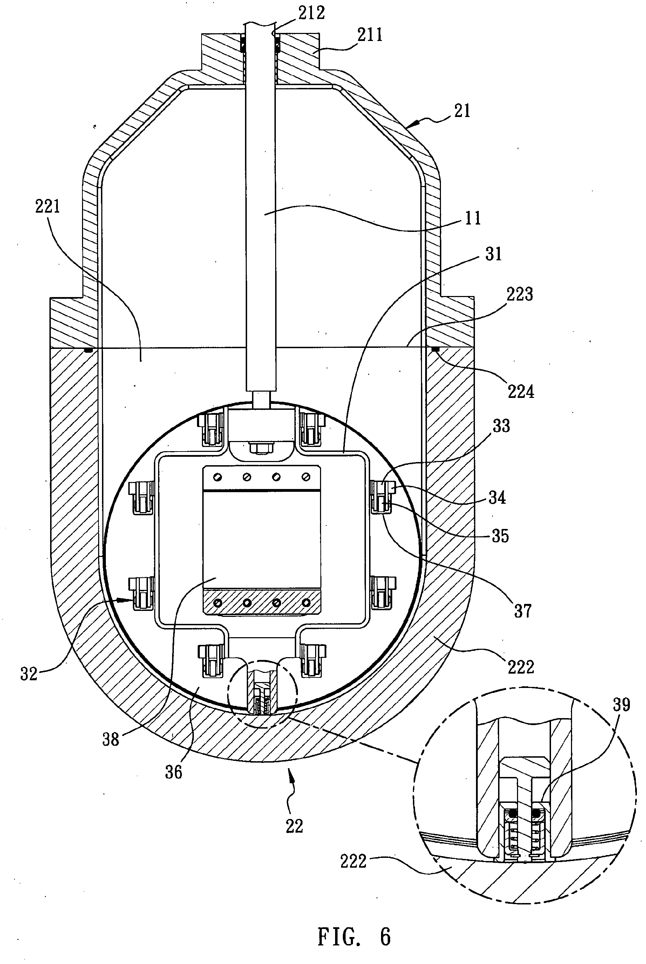

Referring to **Fig. 5** and **Fig. 6**, when the valve of the present invention is to be closed, the driving axle **11** of the power cylinder **10** triggers the seal plate assembly **30** to move from the first valve member **21** into the second valve member **22.** When the seal plates **36** of the seal plate assembly **30** push against the arc board **222** of the second valve member **22**, the seal plates **36** are in alignment with the two valve holes **225.** Therein, when the seal plate assembly **30** contacts the arc board **222**, the buffer member **39** produces a buffering function, so as to absorb the impact force between the arc board **222** and the seal plate assembly **30**, thereby preventing the driving frame **31** and the seal plates **36** from being deformed or damaged, thus extending the service life of the product.

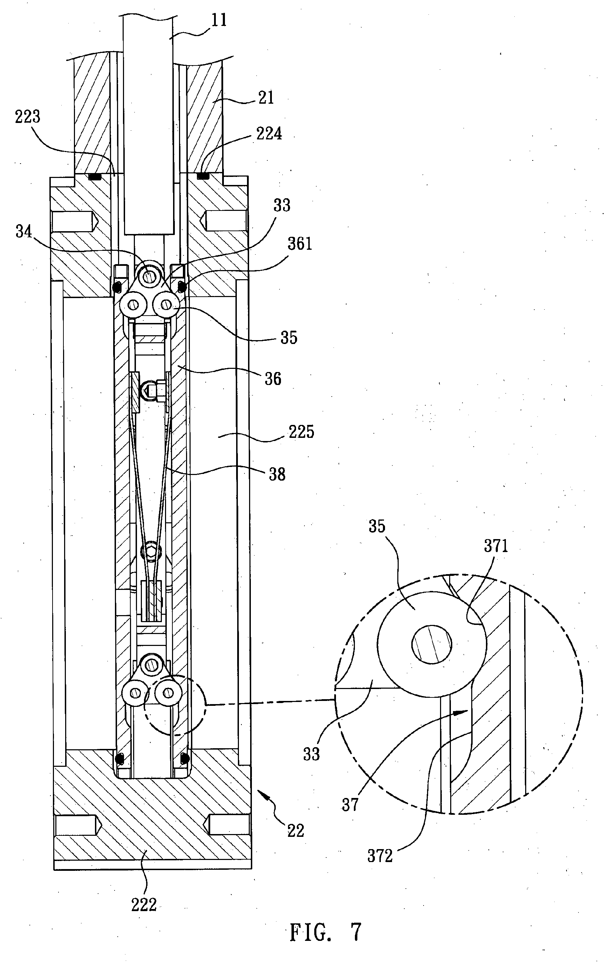

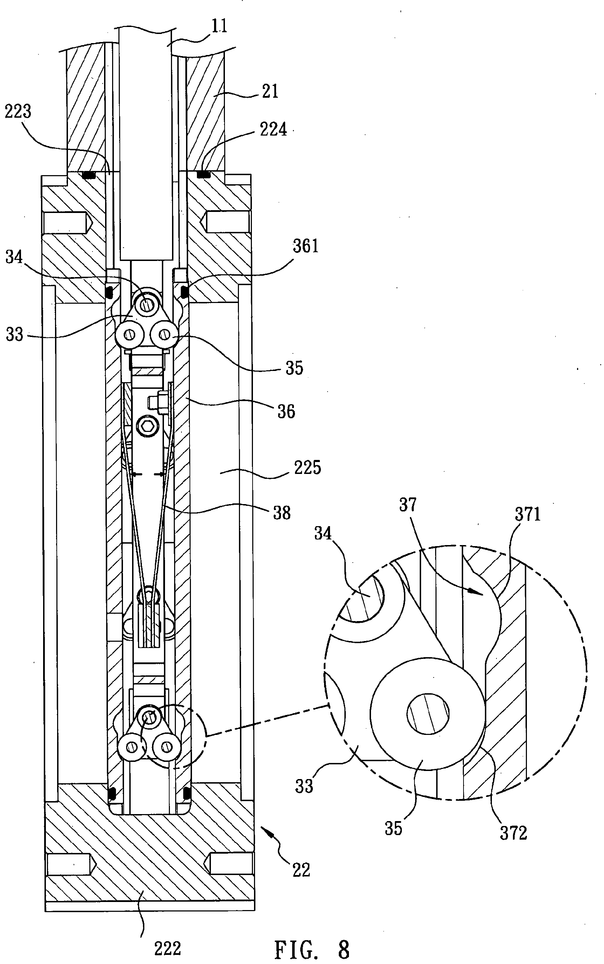

After the seal plates **36** being in alignment with the two valve holes **225**, the driving axle **11** continues pushing the driving frame **31**, while the roller bearings **35** of each of the roller seat **33** is driven to slide from the deeper stop portion **371** (as shown in **Fig. 7**) to the shallower slope portion **372**, so as to increase the distance between the two seal plates **36** (as shown in **Fig. 8**). Gaps between the seal plates **36** and the valve holes **225** are sealed, thereby achieving the air-tightness of the present invention. Also, the seal member **361** increases the air-tightness between each of the seal plates **36** and the corresponding valve hole **225.**

In contrast, when the driving axle **11** is reversely operated, the roller bearings **35** of each of the roller seat **33** slides from the slope portion **372** to the stop portion **371**, while the distance between the two seal plates **36** is shortened due to the resilient restoring force of the elastic member **38**, thereby ceasing the air-tight status between the seal plates **36** and the corresponding valve holes **225.** After the roller bearings **35** are engaged at the stop portion **371**, the seal plate assembly **30** is driven to move back to the first valve member **21** by the driving axle **11**, so as to open the valve holes **225.**

Although particular embodiments of the invention have been described in detail for purposes of illustration, various modifications and enhancements may be made without departing from the spirit and scope of the invention. Accordingly, the invention is not to be limited except as by the appended claims.

## Claims

1. A double sealing valve, comprising:
at least a power cylinder (10) provided with a driving axle (11) capable of axially moving;
a valve body (20) formed of a hollow first valve member (21) and a hollow second valve member (22), the first valve member (21) having a cylinder seat (211) for receiving the power cylinder (10), an axle bore (212) disposed on the cylinder seat (211) for the driving axle (11) to pass through into the first valve member (21), the second valve member (22) provided with two valve holes (225) oppositely disposed thereon;
a seal plate assembly (30) disposed in the valve body (20) and having a driving frame (31) connected to one end of the driving axle (11), plural roller assemblies (32) disposed around the driving frame (31), with each of the roller assemblies (32) having a roller seat (33), the roller seat (33) axially disposed on the periphery of the driving frame (31) by at least a roller axle (34); furthermore, the seal plate assembly (30) has two seal plates (36), while each of the seal plates (36) is disposed between one of the two sides of the driving frame (31) and the valve body (20), respectively, and each of the seal plate (36) is concavely provided with plural driving grooves (37) in an amount corresponding to the amount of the roller assemblies (32), while two roller bearings (35) are disposed on the roller seat (33) of each roller assembly (32) for contacting the corresponding driving groove (37), such that each of the roller bearings (35) is allowed to slide in the corresponding driving groove (37).

2. The double sealing valve of claim 1, wherein the driving groove (37) is formed of a stop portion (371) and a slope portion (372), while the stop portion (371) is disposed on one side of the driving groove (37) facing toward the driving axle (11), and the slope portion (372) is disposed on the other side of the driving groove (37) opposite to the driving axle (11).

3. The double sealing valve of claim 2, wherein the depth from the stop portion (371) to the slope portion (372) of the driving groove (37) varies from deep to shallow.

4. The double sealing valve of claim 1, wherein at least a seal member (361) is disposed around the periphery of the seal plate (36).

5. The double sealing valve of claim 1, wherein the two seal plates (36) are connected by at least an elastic member (38).

6. The double sealing valve of claim 1, wherein one end of the driving frame (31) opposite to the driving axle (11) is provided with at least a buffer member (39).

7. The double sealing valve of claim 6, wherein the buffer member (39) is in axial alignment with the driving axle (11).

8. The double sealing valve of claim 1, wherein the second valve member (22) is formed of two side boards (221) and at least an arc board (222), and the arc board (222) has an opening (223) for being connected with the first valve member (21), while the inner spaces of the first valve member (21) and the second valve member (22) are connected, such that the driving axle (11) is allowed to pass through into the first valve member (21) and the second valve member (22) from the axle bore (212).

9. The double sealing valve of claim 8, wherein at least a seal member (224) is disposed on the periphery of the opening (223), such that the first valve member (21) is allowed to air-tightly combined with the second valve member (22).

10. The double sealing valve of claim 1, wherein the roller seat (33) is in a shape of triangular, with the roller axle (34) disposed on one corner thereof and two roller bearings (35) disposed on the other two corners thereof, respectively.

11. The double sealing valve of claim 1, wherein the roller seat (33) is in a rhombus shape, with two roller axles (34) disposed on two corners of the roller seat (33) placed on the vertical axis thereof and two roller bearings (35) disposed on the other two corners on the horizontal axis thereof, respectively.

## Patentansprüche

1. Doppelabdichtungsventil, umfassend:
zumindestens einen Kraftzylinder (10), der mit einer axial beweglichen Antriebsachse (11) ausgebildet ist;
einen Ventilkörper (20), der aus einem hohlen ersten Ventilelement (21) und einem hohlen zweiten Ventilelement (22) ausgebildet ist, wobei das erste Ventilelement (21) einen Zylindersitz (211) zur Aufnahme des Kraftzylinders (10) und eine Achsbohrung (212), die an dem Zylindersitz (211) für die Antriebsachse (11) angeordnet ist, um durch das erste Ventilelement (21) zu verlaufen aufweist, wobei das zweite Ventilelement (22) mit zwei gegenüberliegend daran angeordneten Ventillöchern (225) ausgebildet ist;
eine in dem Ventilkörper (20) angeordnete Dichtungsplattenanordnung (30) mit einem mit einem Ende der Antriebsachse (11) verbundenen Antriebsrahmen (31), mehrere um den Antriebsrahmen (31) angeordnete Rollenanordnungen (32), wobei jede der Rollenanordnungen (32) einen Rollensitz (33) aufweist und der Rollensitz (33) axial am Umfang des Antriebsrahmens (31) durch mindestens eine Rollenachse (34) angeordnet ist; weiterhin weist die Dichtungsplattenanordnung (30) zwei Dichtungsplatten (36) auf, während jede der Dichtungsplatten (36) jeweils zwischen einer der beiden Seiten des Antriebsrahmens (31) und des Ventilkörpers (20) angeordnet ist, und jede der Dichtungsplatte (36) konkav mit einer Anzahl von Antriebsnuten (37) ausgebildet ist, die der Anzahl der Rollenanordnungen (32) entspricht, während zwei Rollenlager (35) auf dem Rollensitz (33) jeder Rollenanordnung (32) zum Kontaktieren der entsprechenden Antriebsnut (37) angeordnet sind, sodass jedes der Wälzlager (35) in die entsprechende Antriebsnut (37) verschoben werden kann.

2. Doppelabdichtungsventil nach Anspruch 1, wobei die Antriebsnut (37) aus einem Anschlagabschnitt (371) und einem Neigungsabschnitt (372) ausgebildet ist, während der Anschlagabschnitt (371) auf einer der Antriebsachse (11) zugewandten Seite der Antriebsnut angeordnet ist (37), und der Neigungsabschnitt (372) auf der anderen der Antriebsnut (37) der Antriebsachse (11) gegenüberliegenden Seite angeordnet ist.

3. Doppelabdichtungsventil nach Anspruch 2, wobei die Tiefe vom Anschlagabschnitt (371) zum Neigungsabschnitt (372) der Antriebsnut (37) von tief bis flach variiert.

4. Doppelabdichtungsventil nach Anspruch 1, dadurch wobei zumindestens ein Dichtungselement (361) um den Umfang der Dichtungsplatte (36) angeordnet ist.

5. Doppelabdichtungsventil nach Anspruch 1, **dadurch gekennzeichnet, dass** die beiden Dichtungsplatten (36) durch mindestens ein elastisches Element (38) verbunden sind.

6. Doppelabdichtungsventil nach Anspruch 1, wobei ein der Antriebsachse (11) gegenüberliegendes Ende des Antriebsrahmens (31) mit mindestens einem Pufferelement (39) versehen ist.

7. Doppelabdichtungsventil nach Anspruch 6, wobei das Pufferelement (39) in axialer Ausrichtung mit der Antriebsachse (11) steht.

8. Doppelabdichtungsventil nach Anspruch 1, wobei das zweite Ventilelement (22) aus zwei Seitenplatten (221) und mindestens einer Bogenplatte (222) ausgebildet ist und die Bogenplatte (222) eine Öffnung (223) aufweist, um mit dem ersten Ventilelement (21) verbunden zu sein, während die Innenräume des ersten Ventilelements (21) und des zweiten Ventilelements (22) so verbunden sind, sodass das es der Antriebsachse (11) möglich ist, durch das erste Ventilelement (21) und das zweite Ventilelement (22) von der Achsbohrung (212) zu verlaufen.

9. Doppelabdichtungsventil nach Anspruch 8, wobei am Umfang der Öffnung (223) mindestens ein Dichtungselement (224) angeordnet ist, sodass das erste Ventilelement (21) luftdicht mit dem zweiten Ventilelement (22) verbindbar ist.

10. Doppelabdichtungsventil nach Anspruch 1, wobei der Rollensitz (33) dreieckig ausgebildet ist und die Rollenachse (34) an einer Ecke davon und zwei Rollenlager (35) jeweils an den beiden anderen Ecken angeordnet sind.

11. Doppelabdichtungsventil nach Anspruch 1, wobei der Rollensitz (33) in einer Rhombusform ausgebildet ist und jeweils zwei Rollenachsen (34) an zwei Ecken des auf vertikalen Achse angeordneten Rollensitzes (33) angeordnet sind und zwei Rollenlager (35) an den beiden anderen Ecken auf der horizontalen Achse davon angeordnet sind.

## Revendications

1. - Vanne à double obturation, comprenant :
au moins un vérin de commande (10) ayant un axe d'entraînement (11) capable de se déplacer axialement ;
un corps de vanne (20) formé d'un premier élément de vanne creux (21) et d'un second élément de vanne creux (22), le premier élément de vanne (21) ayant un siège de vérin (211) pour recevoir le vérin de commande (10), un alésage d'axe (212) disposé sur le siège de vérin (211) pour que l'axe d'entraînement (11) y passe à travers jusque dans le premier élément de vanne (21), le second élément de vanne (22) comportant deux trous de vanne (225) disposés de manière opposée sur celui-ci ;
un ensemble plaque obturatrice (30) disposé dans le corps de vanne (20) et ayant un châssis d'entraînement (31) relié à une extrémité de l'axe d'entraînement (11), plusieurs ensembles rouleaux (32) disposés autour du châssis d'entraînement (31), avec chacun des ensembles rouleaux (32) ayant un siège de rouleau (33), le siège de rouleau (33) étant disposé axialement sur la périphérie du châssis d'entraînement (31) par au moins un axe de rouleau (34) ; en outre, l'ensemble plaque obturatrice (30) comporte deux plaques obturatrices (36), tandis que chacune des plaques obturatrices (36) est disposée entre un des deux côtés du châssis d'entraînement (31) et le corps de vanne (20), respectivement, et chaque plaque obturatrice (36) comporte de façon concave plusieurs rainures d'entraînement (37) en nombre correspondant au nombre des ensembles rouleaux (32), tandis que deux roulements à rouleaux (35) sont disposés sur le siège de rouleau (33) de chaque ensemble rouleau (32) pour être en contact avec la rainure d'entraînement correspondante (37), de telle sorte que chacun des roulements à rouleaux (35) est autorisé à coulisser dans la rainure d'entraînement correspondante (37).

2. - Vanne à double obturation selon la revendication 1, dans laquelle la rainure d'entraînement (35) est formée d'une partie d'arrêt (371) et d'une partie en pente (372), tandis que la partie d'arrêt (371) est disposée sur un côté de la rainure d'entraînement (37) dirigé vers l'axe d'entraînement (11), et la partie en pente (372) est disposée sur l'autre côté de la rainure d'entraînement (37) à l'opposé de l'axe d'entraînement (11).

3. - Vanne à double obturation selon la revendication 2, dans laquelle la profondeur de la partie d'arrêt (371) à la partie en pente (372) de la rainure d'entraînement (37) varie de profonde à peu profonde.

4. - Vanne à double obturation selon la revendication 1, dans laquelle au moins un élément d'étanchéité (361) est disposé autour de la périphérie de la plaque obturatrice (36).

5. - Vanne à double obturation selon la revendication 1, dans laquelle les deux plaques obturatrices (36) sont reliées par au moins un élément élastique (38).

6. - Vanne à double obturation selon la revendication 1, dans laquelle une extrémité du châssis d'entraînement (31) à l'opposé de l'axe d'entraînement (11) comporte au moins un élément d'amortissement (39).

7. - Vanne à double obturation selon la revendication 6, dans laquelle l'élément d'amortissement (39) est en alignement axial avec l'axe d'entraînement (11).

8. - Vanne à double obturation selon la revendication 1, dans laquelle le second élément de vanne (22) est formé de deux plaques latérales (221) et d'au moins une plaque en arc (222), et la plaque en arc (222) a une ouverture (223) destinée à être reliée au premier élément de vanne (21), tandis que les espaces internes du premier élément de vanne (21) et du second élément de vanne (22) sont reliés, de telle sorte que l'axe d'entraînement (11) est autorisé à passer dans le premier élément de vanne (21) et le second élément de vanne (22) à partir de l'alésage d'axe (212).

9. - Vanne à double obturation selon la revendication 8, dans laquelle au moins un élément d'étanchéité (224) est disposé sur la périphérie de l'ouverture (223), de telle sorte que le premier élément de vanne (21) est autorisé à être combiné de manière étanche à l'air avec le second élément de vanne (22).

10. - Vanne à double obturation selon la revendication 1, dans laquelle le siège de rouleau (33) est sous la forme d'un triangle, avec l'axe de rouleau (34) disposé sur un coin de celui-ci et deux roulements à rouleaux (35) disposés sur les deux autres coins de celui-ci, respectivement.

11. - Vanne à double obturation selon la revendication 1, dans laquelle le siège de rouleau (33) est sous la forme d'un losange, avec deux axes de rouleau (34) disposés sur deux coins du siège de rouleau (33) placés sur l'axe vertical de celui-ci et deux roulements à rouleaux (35) disposés sur les deux autres coins sur l'axe horizontal de celui-ci, respectivement.
